# EUROPÄISCHE PATENTANMELDUNG

(11) **EP 1 640 533 A2**
(43) Veröffentlichungstag der Anmeldung: **29.03.2006**
(21) Anmeldenummer: 05020186.2
(22) Anmeldetag: 16.09.2005
(51) Int. Cl.: E05B 15/02

(54) **Verschlussteil**

(30) Priorität: 24.09.2004 DE 102004046468
(71) Anmelder: ISE Industries GmbH, 58455 Witten (DE)
(72) Erfinder: Ellenbeck, Günter, 45883 Gelsenkirchen (DE); Luchtenberg, Dirk, 58453 Witten (DE); Schalla, Holger, 58453 Witten (DE)
(74) Vertreter: Wenzel & Kalkoff

(57) **Zusammenfassung**

Die Erfindung betrifft ein Verschlussteil mit einer Öffnung zur Aufnahme eines Bauteils, insbesondere eines Verschlusshakens einer mit dem Verschlussteil in Eingriff bringbaren Verriegelungsvorrichtung und einer in der Öffnung drehbar auf einem beiderseits der Öffnung angeordneten Lagerbolzen gelagerten Rolle. Um ein Verschlussteil zu schaffen, bei dem die Rolle derart angeordnet ist, dass auch im unbelasteten Zustand der Rolle keinerlei Klappergeräusche erzeugt werden, ist vorgesehen, daß die Rolle (3) endseitig an den einander gegenüberliegenden Innenflächen (9) der Öffnung (18) oder an einer der einander gegenüberliegenden Innenflächen (9) und einem ersten Absatz (16) des Lagerbolzens (4) anliegt.

## Beschreibung

Die Erfindung betrifft ein Verschlussteil mit einer Öffnung zur Aufnahme eines Bauteils, insbesondere eines Verschlusshakens einer mit dem Verschlussteil in Eingriff bringbaren Verriegelungsvorrichtung und einer in der Öffnung drehbar auf einem beiderseits der Öffnung angeordneten Lagerbolzen gelagerten Rolle.

Verschlussteile der vorstehenden Art werden u.a. im Kraftfahrzeugbereich zum lösbaren Verbinden eines Fahrzeugdachs mit einem Karosseriebauteil verwendet. Die in der Öffnung gelagerte Rolle dient dabei - beispielsweise im Zusammenspiel mit einem Verschlusshaken der Verriegelungsvorrichtung - dazu, die bei einer Schließ- oder Öffnungsbewegung des Verschlusshakens auftretenden Reibgeräusche zwischen dem Verschlussteil und dem Verschlusshaken zu reduzieren.

Im geschlossenen Zustand des Fahrzeugdachs, in der der Verschlusshaken an der Rolle anliegt, nimmt die Rolle zudem durch Rotation um ihre Drehachse und translatorische Verschiebung eventuell auftretende Relativbewegungen zwischen dem Verschlusshaken und dem Verschlussteil auf, die beispielsweise aus einer Verwindung des Fahrzeugs resultieren können.

Die bekannten Verschlussteile weisen jedoch den Nachteil auf, dass im unbelasteten Zustand der Rolle - bei einer Verwendung am Fahrzeugdach ist dies bei geöffnetem Fahrzeugdach der Fall - aufgrund der spielbehafteten Lagerung der Rolle in der Öffnung Klappergeräusche auftreten können. Diese Geräusche, die aufgrund der Montage der Verschlussteile in den als Hohlrahmen ausgebildeten Windschutzscheibenrahmen zusätzlich verstärkt werden, können als besonders störend empfunden werden.

Der Erfindung liegt daher die Aufgabe zugrunde, ein Verschlussteil zu schaffen, bei dem die Rolle derart angeordnet ist, dass auch im unbelasteten Zustand der Rolle keinerlei Klappergeräusche erzeugt werden.

Die Erfindung löst diese Aufgabe durch ein Verschlussteil gemäß Anspruch 1. Vorteilhafte Weiterbildungen der Erfindung sind in den abhängigen Ansprüchen beschrieben.

Kennzeichnend für das erfindungsgemäße Verschlussteil ist die Lagerung der Rolle. Diese ist so in der Öffnung angeordnet, dass die Rolle endseitig an den einander gegenüberliegenden Innenflächen der Öffnung oder an einer der einander gegenüberliegenden Innenflächen und einem ersten Absatz des Lagerbolzens anliegt.

Diese beiden alternativen Lösungen haben den Grundgedanke gemein, die Rolle drehbar und gleichzeitig spielfrei in der Öffnung auf dem Lagerbolzen zu lagern, so dass die aus einer Axialbewegung der Rolle auf dem Lagerbolzen resultierenden Klappergeräusche vermieden werden.

Bei der ersten Lösung liegt die Rolle mit ihren Endseiten an den einander gegenüberliegenden und durch den Lagerbolzen verbundenen Innenflächen der Öffnung an. Die Rolle ist dabei geringfügig länger als der Abstand der Innenflächen der Öffnung, aber nur so lang, dass sich die Rolle im Zusammenwirken mit einem Bauteil, beispielsweise dem Verschlusshaken einer Verriegelungsvorrichtung, weiterhin auf dem Lagerbolzen dreht, so dass Reibgeräusche beim Öffnen und Schließen sowie Relativbewegungen in der Schließlage aufgenommen werden können.

Im Falle der zweiten Lösung liegt die Rolle nur mit einem ersten Ende an einer der Innenflächen der Öffnung an. Mit dem zweiten Ende liegt die Rolle im Gegensatz zur ersten Lösung an einem in der Einbaulage in der Öffnung angeordneten ersten Absatz des Lagerbolzens an.

Der grundsätzlich frei wählbare Abstand des ersten Absatzes zu der Innenfläche, an der die Rolle mit ihrem ersten Ende anliegt, bestimmt dabei die Höhe der Kraft die aufgebracht werden muss, um die Rolle auf dem Lagerbolzen zu verdrehen. Mit dieser Lösung ist somit eine von der Länge der Rolle unabhängige Einstellbarkeit der spielfreien Lagerung möglich, die zudem jederzeit nachjustiert werden kann. Eine exakte Anpassung der Rolle an die Abmessungen der Öffnung ist bei dieser Lösung somit nicht erforderlich.

Die Ausgestaltung der Rolle - einstückig oder mehrstückig, Material, Oberfläche etc. - kann grundsätzlich frei gewählt werden, so dass das Verschlussteil optimal an den jeweiligen Einsatzzweck angepasst werden kann. Nach einer vorteilhaften Weiterbildung der Erfindung weist die Rolle jedoch endseitig angeordnete, vorzugsweise an einen Grundkörper der Rolle aufgesetzte, angeklebte oder angespritzte Kunststoffelemente auf.

Diese Ausgestaltung der Erfindung ermöglicht es, die Rolle unabhängig von deren übrigen Parametern an den Einsatzzweck des Verschlussteils und an die für das Verschlussteil verwendeten Materialien, an denen die Rolle endseitig anliegt, anzupassen. Zudem können für die Kunststoffelemente besonders hochwertige Materialien verwendet werden, die besonders gute Gleit- und Reibeigenschaften aufweisen. Die Gesamtkosten der Herstellung der Rolle werden dabei nur geringfügig erhöht, da nur ein geringer Materialbedarf besteht.

Die Verbindung der Kunststoffelemente mit dem Grundkörper durch Aufsetzen, Ankleben oder Anspritzen stellt dabei eine besonders einfache und sichere Verbindung des Rollengrundkörpers mit den Kunststoffelementen dar, die sich zudem besonders kostengünstig ausführen lässt.

Eine weiter verbesserte Anpassung der Rolle an die Öffnung ergibt sich nach einer weiteren Ausführungsform der Erfindung, wonach die Innenflächen der Öffnung im Kontaktbereich mir der Rolle eine Kunststoffoberfläche aufweisen, die insbesondere aufgesetzt, angeklebt oder angespritzt ist.

Durch diese Weiterbildung der Erfindung lassen sich die Gleit- und Reibeigenschaften der Endseiten der Rolle an den Innenflächen der Öffnung in ergänzender Weise verbessern. Ebenso wie bei der Verwendung von separaten Kunststoffelementen für die Rolle, ermöglicht dabei die Ausbildung von Kunststoffoberflächen an den Innenflächen der Öffnung eine Anpassung der aufeinander reibenden Flächen der Rolle und der Öffnung, die von dem für das Verschlussteil und den Rollengrundkörper verwendeten Material unabhängig ist.

Die Rolle, die Kunststoffelemente und/oder die Kunststoffoberfläche ist nach einer besonders vorteilhaften Ausgestaltung der Erfindung aus ausgleichendem/verschleißarmen Material z.B. PTFE gebildet. Dieses Material zeichnet sich dabei insbesondere durch seine hervorragenden Gleit- und Reibeigenschaften aus, die auch bei einer hohen Klemmkraft der Rolle in der Öffnung ein Verdrehen der Rolle auf dem Lagerbolzen gewährleisten. Durch die Möglichkeit, die Rolle somit auch unter höheren axialen Kräften drehbar in der Öffnung anordnen zu können, wird Klappergeräuschen in ergänzender Weise vorgebeugt.

Im Falle der zweiten Lösung, wonach die Rolle mit ihrem zweiten Ende an dem Absatz des Lagebolzens anliegt, ist die Einstecktiefe des Lagerbolzen in das dem Absatz gegenüberliegenden Bereich des Verschlussteils frei wählbar. Nach einer vorteilhaften Ausgestaltung der Erfindung weist der Lagerbolzen jedoch einen zweiten Absatz auf, der die Einstecktiefe des Lagerbolzen begrenzt.

Der zweite Absatz weist dabei einen Außendurchmesser auf, der größer ist als das verjüngte, an den zweiten Absatz angrenzende Lagerbolzenende, der in einer entsprechenden Öffnung in dem Verschlussteil angeordnet werden kann. Somit ist die maximale Einstecktiefe des Lagerbolzens dann erreicht, wenn der zweite Absatz an der Innenfläche anliegt. Um dabei in jedem Fall eine spielfreie Rollenlagerung zu erreichen, ist eine zwischen dem ersten und zweiten Abschnitt gebildete Rollenaufnahmenfläche kürzer als die Länge der Rolle.

Durch diese Ausgestaltung der Erfindung wird in besonders zuverlässiger Weise erreicht, dass die Rolle keine Klappergeräusche erzeugt und gleichzeitig die zur drehbaren Befestigung maximal zulässige, axial auf die Rolle wirkende Kraft nicht überschritten wird und sich die Rolle im Bedarfsfall auf dem Lagerbolzen dreht.

Die Befestigung des Lagerbolzens in den an die Öffnung angrenzenden Bereichen des Verschlussteils kann grundsätzlich in beliebiger Weise erfolgen. Nach einer vorteilhaften Weiterbildung der Erfindung ist der Lagerbolzen jedoch in das Verschlussteil eingeschraubt, eingenietet oder weist im Bereich seines Lagerbolzenkopfs an seiner Umfangsfläche eine Profilierung, insbesondere eine Rändelung auf.

Im Falle der Einschraubung des Lagerbolzens ist in einem der dem Lagerbolzen als Aufnahme dienende Bereiche des Verschlussteils ein Gewinde angeordnet. Vorzugsweise ist das Gewinde an dem dem Lagerbolzenkopf gegenüberliegenden Lagerbolzenende angeordnet und ist in ein entsprechendes Gewinde im Verschlussteil einschraubbar.

Sowohl die Festlegung des Lagerbolzens an dem Verschlussteil durch Einschrauben oder Einnieten als auch die Verwendung einer Profilierung an dem Lagerbolzenkopf gewährleistet in besonders zuverlässiger Weise eine spielfreie Anordnung des Lagerbolzens an dem Verschlussteil. Der durch die Profilierung gebildete Durchmesser des Lagerbolzenkopfs ist dabei geringfügig größer als eine am Verschlussteil angeordnete Öffnung zur Aufnahme des Lagerbolzenkopfs.

Nachstehend werden Ausführungsbeispiele der Erfindung anhand der Zeichnungen beschrieben. In den Zeichnungen zeigen:
- Fig. 1: eine Draufsicht auf ein Verschlussteil mit einer in einer Öffnung angeordneten Rolle;
- Fig. 2: eine Schnittansicht durch ein erstes Verschlussteil entlang der Längsachse der einerseits an einer Innenfläche und andererseits an einem Absatz eines Lagerbolzens anliegenden Rolle;
- Fig. 3: eine Schnittansicht durch ein zweites Verschlussteil entlang der Längsachse einer endseitig an der Innenfläche der Öffnung angeordneten und mit Kunststoffelementen versehenen Rolle und
- Fig.4: eine Schnittansicht durch ein drittes Verschlussteil entlang der Längsachse der einerseits an einer Innenfläche und andererseits an einem Absatz eines Lagerbolzens anliegenden und mit Kunststoffelementen versehenen Rolle.

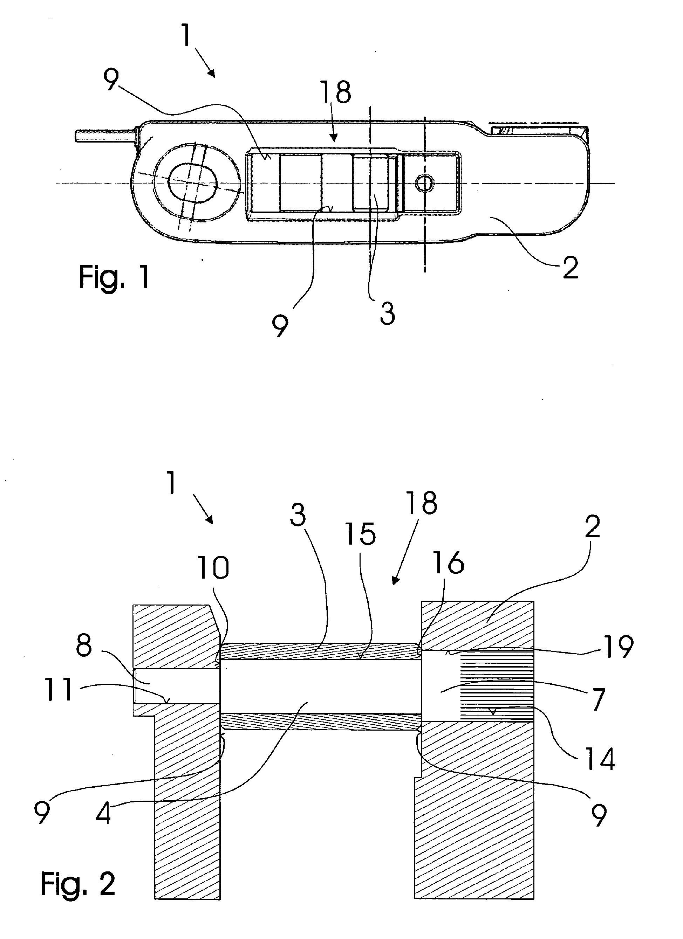

Fig. 1 zeigt eine Draufsicht eines Verschlussteils 1, das zum lösbaren Verbinden eines hier nicht dargestellten Fahrzeugdachs an einem Karosseriebauteil, vorzugsweise einem Windschutzscheibenrahmen, eines hier ebenfalls nicht dargestellten Fahrzeugs angeordnet ist.

In der Öffnung 18 ist eine endseitig an den Innenflächen 9 der Öffnung 18 anliegende Rolle 3 drehbar angeordnet. Im Zusammenwirken mit einem Fanghaken einer an dem Fahrzeugdach angeordneten Verriegelungsvorrichtung verhindert die Rolle 3 das Entstehen von Schleif- und Reibgeräuschen beim Öffnungs- und Schließvorgang des Fahrzeugdachs und bei gegebenenfalls auftretenden Relativbewegungen des Fanghakens und der Rolle 3 in einer Schließlage des Fahrzeugdachs.

In einer ersten in Fig. 2 dargestellten Ausführungsform weist das Verschlussteil 1 einen Lagerbolzen 4 auf, der eine zwischen zwei Absätzen 10, 16 gebildete Rollenaufnahmefläche 15 aufweist. Der einen Lagerbolzenkopf 7 und die Rollenaufnahmefläche 15 voneinander abgrenzende erste Absatz 16 liegt an einem ersten Ende der Rolle 3 an.

Durch das Einstecken des Lagebolzens 4 in die zur Aufnahme des Lagerbolzenkopfs 7 und eines Lagerbolzenendes 8 in einem Gehäuse 2 des Verschlussteils 1 angeordneten Öffnungen 11, 19 wird das dem ersten Absatz 11 gegenüberliegende zweite Ende der Rolle 3 gegen die gegenüberliegende Innenfläche 9 der Öffnung 18 gedrückt, so dass in Achsrichtung des Lagerbolzens 4 gerichtete Bewegungen der Rolle 3 ausgeschlossen sind.

Der zweite Absatz 10 liegt wie die Rolle 3 an der dem ersten Absatz gegenüberliegenden Innenfläche 9 der Öffnung 18 an. Der zweite Absatz verhindert somit ein zu tiefes Einstecken des Lagerbolzenendes 8 in die Öffnung 11, so dass ein zu starkes Verklemmen der Rolle 3 in der Öffnung 18 verhindert wird.

Zur Sicherung der Position des Lagerbolzens 4 in den Öffnungen 11, 19 des Gehäuses 2 des Verschlussteils 1 weist der Lagerbolzenkopf 7 eine Profilierung in Form einer Rändelung 14 auf. Der Außendurchmesser der Rändelung 14 ist dabei geringfügig größer als der Innendurchmesser der Öffnung 19, so dass der Lagerbolzenkopf 7 in die Öffnung 19 eingepresst werden kann. Ebenfalls ist eine Vernietung des Endes Bolzen 8 zu Positionssicherung möglich.

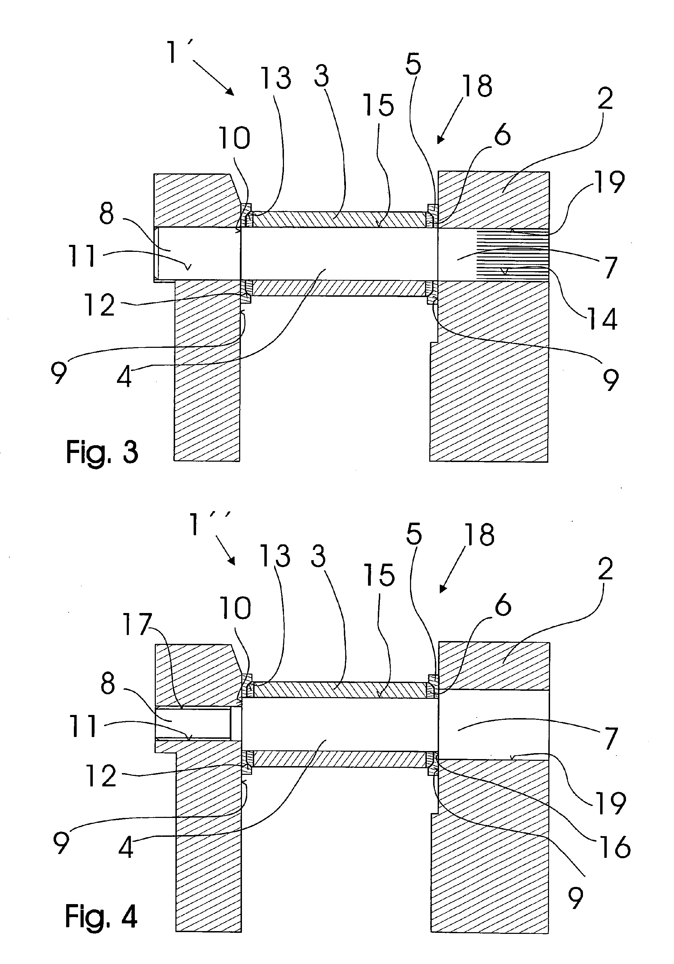

Fig. 3 zeigt eine weitere Ausgestaltung eines Verschlussteils 1'. Im Gegensatz zu dem in Fig. 2 dargestellten Verschlussteil 1 weist das Verschlussteil 1' einen Lagerbolzen 4 mit einem über die gesamte Länge konstanten Durchmesser auf.

An einen Grundkörper der Rolle 4 sind endseitig Kunststoffelemente 5, 6 angesetzt, angeklebt oder angespritzt, die an den Innenflächen 9 der Öffnung 18 anliegen. Zur Lagesicherung der Rolle 3 weisen die Kunststoffelemente 5, 6 ggf. aneinander angepasste Abrundungen 12,13 auf.

Um sicherzustellen, dass axiale Bewegungen der Rolle 3 auf dem Lagerbolzen 4 ausgeschlossen werden, ist die durch die Dicke der Kunststoffelemente 5, 6 sowie die Länge des Rollengrundkörpers der Rolle 3 gebildete Länge größer als der Abstand der Innenflächen 9 der Öffnung 18. Die Längendifferenz ist dabei so bemessen, dass sich die Rolle 3 im Zusammenwirken mit dem Fanghaken noch dreht.

Die Lagesicherung des Lagerbolzen 4 erfolgt wie bei dem in Fig. 2 dargestellten Verschlussteil 1 durch eine an dem Lagerbolzenkopf 7 angeordnete Rändelung 14. Ebenso ist ein durchgängier Bolzen mit einseitigem Flanschkopf, welcher auf der Gegenseite vernietet wird möglich.

In Fig. 4 ist eine weitere Ausführungsform eines Verschlussteils 1'' dargestellt, bei dem der in Fig. 2 dargestellte Lagerbolzen 4 mit den in Fig. 3 dargestellten Kunststoffelementen 5, 6 kombiniert ist. An dem der ersten Absatz 16 gegenüberliegenden Ende liegt das mit dem Kunststoffelement 5, 6 versehene zweite Ende der Rolle 3 an der vollständig an der Innenfläche 9 an.

Im Gegensatz zu dem in Fig. 2 und 3 dargestellten Verschlussteilen 1, 1' weist der Lagerbolzen 4 an seinem Lagerbolzenende 8 ein Gewinde 17 auf, das in ein entsprechendes in der Öffnung 11 angeordnetes Gewinde 17 einschraubbar ist. Hierzu weist der Lagerbolzenkopf 7 eine hier nicht dargestellte Werkzeugaufnahmeöffnung auf. Durch diese Art der Befestigung kann auf die in Fig. 2 und Fig. 3 dargestellte Rändelung am Lagerbolzenkopf 7 verzichtet werden. Ebenso ist ein glattes Bolzenende, welches vernietet wird möglich.

Im übrigen entspricht der Aufbau des Verschlussteils 1" den in Fig. 2 und 3 dargestellten Verschlussteilen 1, 1' .

## Patentansprüche

1. Verschlussteil mit
- einer Öffnung zur Aufnahme eines Bauteils, insbesondere eines Verschlusshakens einer mit dem Verschlussteil in Eingriff bringbaren Verriegelungsvorrichtung und
- einer in der Öffnung drehbar auf einem beiderseits der Öffnung angeordneten Lagerbolzen gelagerten Rolle,
**dadurch gekennzeichnet, dass**
die Rolle (3) endseitig an den einander gegenüberliegenden Innenflächen (9) der Öffnung (18) oder an einer der einander gegenüberliegenden Innenflächen (9) und einem ersten Absatz (16) des Lagerbolzens (4) anliegt.

2. Verschlussteil nach Anspruch 1, **dadurch gekennzeichnet, dass** die Rolle (3) endseitig angeordnete Kunststoffelemente (5, 6) aufweist.

3. Verschlussteil nach Anspruch 1 oder 2, **dadurch gekennzeichnet, dass** die Kunststoffelemente (5, 6) an einen Grundkörper der Rolle (3) aufgesetzt, angeklebt oder angespritzt sind.

4. Verschlussteil nach einem oder mehreren der vorhergehenden Ansprüche, **dadurch gekennzeichnet, dass** die Innenflächen (9) der Öffnung (18) im Kontaktbereich mit der Rolle (3) Kunststoffelemente (5) aufweisen, die insbesondere aufgesetzt, angeklebt oder angespritzt ist.

5. Verschlussteil nach einem oder mehreren der vorhergehenden Ansprüche, **dadurch gekennzeichnet, dass** die Rolle (3), die Kunststoffelemente (5, 6) aus einem ausgleichendem/verschleißarmen Material z.B. PTFE gebildet ist.

6. Verschlussteil nach einem oder mehreren der vorhergehenden Ansprüche, **dadurch gekennzeichnet, dass** der Lagerbolzen (4) einen die Einstecktiefe des Lagerbolzens (4) in das Verschlussteil (1,1' ') begrenzenden zweiten Absatz (10) aufweist, wobei die Länge des zwischen dem ersten und zweiten Absatz (10,16) gebildeten Rollenaufnahmefläche (15) kürzer ist als die Länge der Rolle (3) und die Breite der Öffnung (18).

7. Verschlussteil nach einem oder mehreren der vorhergehenden Ansprüche, **dadurch gekennzeichnet, dass** der Lagerbolzen (4) zwischen dem ersten Absatz (16) und seinem ersten Ende einen Lagerbolzenkopf (7) und zwischen dem zweiten Absatz (10) und seinem zweiten Ende einen Gewindeabschnitt (17) aufweist, wobei der Lagerbolzen (4) einerseits der Öffnung (18) im Bereich seines Lagerbolzenkopfs (7) in einer Durchgangsbohrung (19) des Verschlussteils (1") anordbar und andererseits der Öffnung (18) mit dem Gewindeabschnitt (17) in das Verschlussteil (1") einschraubbar ist.

8. Verschlussteil nach einem oder mehreren der vorhergehenden Ansprüche, **dadurch gekennzeichnet, dass** der Lagerbolzenkopf (7) an seiner Umfangsfläche eine Profilierung, insbesondere eine Rändelung (14) aufweist.

9. Verschlussteil nach einem oder mehreren der vorhergehenden Ansprüche, **dadurch gekennzeichnet, dass** das freie Lagerbolzenende (8) am Gehäuse (2) vernietet wird.
